# EUROPEAN PATENT SPECIFICATION

(11) **EP 1 563 024 B1**
(45) Date of publication and mention of the grant of the patent: **23.05.2012**
(21) Application number: 03780113.1
(22) Date of filing: 13.11.2003
(51) Int. Cl.: C09D 183/04

(54) **SILICONE RELEASE COATINGS**
SILICON-TRENNBESCHICHTUNGEN
REVETEMENTS ANTICOLLANT DE SILICONE

(30) Priority: 20.11.2002 GB 0227066
(43) Date of publication of application: 17.08.2005
(73) Proprietor: Dow Corning Corporation, Midland, Michigan 48611 (US)
(72) Inventor: CRAY, Stephen Edward, Vale of Glamorgan CF64 5TH (GB); RICH, David, Vale of Glamorgan CF62 5AN (GB); THIBAUT, Marc, B-7160 Godarville (BE)
(74) Representative: Gillard, Richard Edward
(86) International application number: PCT/EP2003/013643
(87) International publication number: WO 2004/046267

(56) References cited:
- EP-A- 0 548 860
- EP-A- 0 718 432
- EP-A- 1 158 023

## Description

This invention relates to silicone based release coating compositions and to release coating of polymer substrates.

Silicone based release coatings are useful in applications where relatively non-adhesive surfaces are required. Single sided liners, for example, backing sheets for pressure sensitive adhesive labels, are usually adapted to temporarily retain the labels without affecting the adhesive properties of the labels. Double sided liners, for example interleaving papers for double sided and transfer tapes, are used to ensure the protection and desired unwind characteristics of a double sided self-adhesive tape or adhesive film. The release coating is required to adhere well to the liner while having relatively low adhesion to the adhesive so that the label can be removed from the liner by a predetermined peel force.

A substrate is coated by applying a silicone based release coating composition onto the substrate and subsequently curing the composition. The preferred curing mechanism is thermally initiated hydrosilylation, which can readily be modified to vary the adhesive force between the release coating and the adhesive label. The basic constituents of silicone based release coating compositions which are cured by hydrosilylation are (A) a polydiorganosiloxane containing alkenyl groups, (B) a cross-linking agent containing organohydrogensiloxane groups and a catalyst for the hydrosilylation reaction between (A) and (B).

The liner substrate to which the release coating is applied is usually paper, but there is an increasing requirement for release coating of polymer substrates such as polyester, for example polyethylene terephthalate, film, polypropylene or polyethylene, particularly for clear on clear labels. Although the smooth surface of films has desired benefits in reduced transfer of adhesive patterns to the label, the use of siliconised films in particular unprimed polyester film has the disadvantage of showing greater tendency of the silicone to rub off over time. The use of polyethylene, polypropylene and polyester film liners has led to the need to design silicone release coatings with improved anchorage and delayed rub-off performance.

The problem of anchorage of siloxane release coatings to polymer films has previously been overcome by the use of high viscosity alkenyl polysiloxanes in conjunction with a crosslinker used at a high Si-H to vinyl molar ratio, as described in EP-A-356054. This incurs further problems. The high viscosity polymer is difficult to handle. The coating has a high release force with most adhesives, and the release force varies with time, reducing on storage.

WO-A-02/06404 describes a release coating composition, comprising a siloxane (A) having terminal alkenyl groups, a crosslinking agent (B) having organohydrogensiloxane groups and a catalyst for the hydrosilylation reaction between (A) and (B), characterised in that the release coating composition contains an aminoalkyl siloxane or aminoalkyl silane in which each amino group is a primary amine group to improve anchorage of the release coating to the substrate. At relatively low temperatures some cure inhibition with these silanes can be observed.

EP-A-1158023 describes a silicone release coating comprising a polydiorganosiloxane containing alkenyl groups, a cross-linking agent comprising a mixture of a polydiorganosiloxane having both molecular terminals capped with Si-bonded H atoms and an organohydrogenpolysiloxane having at least 3 pendant Si-bonded H atoms, and a catalyst. The coating composition may contain 1-20 wt% of a dimethylpolysiloxane of viscosity 1 mPa.s to 1000 Pa.s if necessary to decrease resistance to peeling at low peeling speeds.

US-A-5264499 describes an organopolysiloxane for the formation of a cured release file comprising an organopolysiloxane containing at least two alkenyl groups per molecule, an organohydrogenpolysiloxane containing at least two silicon-bonded hydrogen atoms and at least one alkenyl group per molecule, an addition reaction inhibitor, a platinum group metal catalyst and optionally a nonreactive organopolysiloxane.

A process according to the invention for release coating of a polymer film with a composition comprising a siloxane (A) having alkenyl groups, a crosslinking agent (B) having organohydrogensiloxane groups and a catalyst for the hydrosilylation reaction between (A) and (B), comprising applying the composition to the polymer film and heating the coated film to cure the release coating is characterised in that the release coating composition additionally contains a polydiorganosiloxane (C) of viscosity 10-60.000 mPa.s at 25°C consisting essentially of diorganosiloxane units of the formula -(SiR₂-O)- in which each R group, which may be the same or different, is an alkyl group having 1 to 4 carbon atoms, to improve anchorage of the release coating on the polymer film.

The invention also includes the use of a polydiorganosiloxane (C) of viscosity 10-60,000 mPa.s consisting essentially of diorganosiloxane units of the formula- (SiR₂-O)-, where R is defined as above, to increase the anchorage of a release coating composition, comprising a siloxane (A) having alkenyl groups, a crosslinking agent (B) having organohydrogensiloxane groups and a catalyst for the hydrosilylation reaction between (A) and (B), on a polymer film substrate.

The invention also includes a method of increasing the anchorage of a release coating composition, comprising a siloxane (A) having alkenyl groups, a crosslinking agent (B) having organohydrogensiloxane groups and a catalyst for the hydrosilylation reaction between (A) and (B), on a polymer film substrate, wherein a polydiorganosiloxane (C) of viscosity 10-60,000 mPa.s consisting essentially of diorganosiloxane units of the formula -(SiR₂-O)-, where R is defined as above, is incorporated in the release coating composition.

Surprisingly we have found that the polydiorganosiloxane (C) of viscosity 10-60,000 mPa.s improves the anchorage of release coatings on polymer film substrates, particularly polyester film, without any detrimental effect on cure.

The siloxane (A) is an organopolysiloxane having at least two silicon-bonded alkenyl-functional groups per molecule. The alkenyl group is preferably linear having up to 6 carbon atoms, as exemplified by hexenyl, vinyl, allyl or pentenyl, or maybe cycloalkenyl such as cyclohexenyl.

(A) can for example be a linear organopolysiloxane having the general formula

YX₂SiO(X₂SiO)ₓ(XZSiO)_{y}SiX₂Y

wherein each X denotes independently a phenyl group or an alkyl or cycloalkyl group having from 1 to 10 carbon atoms, for example, methyl, ethyl, propyl, butyl or cyclohexyl; each Y and Z denotes an alkenyl group; and X and Y are such that (A) has a viscosity at 25°C is in the range from 50 to 5000mm²/s, most preferably 200 to 500mm²/s. At least 90% of all the X substituents of (A) are preferably methyl groups, most preferably all being methyl groups. It is preferred that no more than 4% of all units of (A) organopolysiloxane are units with an alkenyl group, as otherwise there is the possibility of crosslinking the release coating composition too much upon curing. Preferably y=0. It is possible but not preferred that small amounts (preferably less than 2% of all the substituents present) of other substituents are present, for example hydroxyl groups.

One preferred siloxane (A) is a branched siloxane comprising one or more Q units of the formula (SiO_{4/2}), from 15 to 995 D units of the formula Rb2SiO2_{/2} and M units of the formula R^{a}R^{b}₂SiO_{1/2}, wherein the R^{a} and Rb substituents are selected from alkyl and alkenyl groups having 1 to 6 carbon atoms, at least three Ra substituents in the branched siloxane being alkenyl units, as described in EP-A-1070734.

The organohydrogenpolysiloxane crosslinking agent (B) generally contains at least three Si-H groups and may have the general formula:-

R*^{t}*₃SiO_{1/2}((CH₃)₂SiO_{2/2})_{d}(CR*^{t}*₂SiO_{2/2})ₑ)SiO_{1/2}R*^{t}*₃

where each R*^{t}* may be an alkyl group having 1 to 4 carbon atoms or hydrogen, *d* is 0 or an integer, *e* is an integer such that *d* + *e* is from 8 to 400. Alternatively the cross-linking agent may be an MQ resin consisting of units of the general formula SiO_{4/2} and R*^{q}*₃SiO_{1/2} wherein at least three R*^{q}* substituents are hydrogen atoms and the remainder are alkyl groups, or may be a rake or comb polymer comprising a polydiorganosiloxane chain containing one or more T or Q unit having a subchain of diorganosiloxane units attached thereto. It is preferred that the hydrosiloxane crosslinker has a viscosity of from 5 to 1000mm²/s at 25°C, more preferably 20 to 350mm²/s, most preferably 50 to 300 mm²/s. The crosslinking agent (B) is preferably present in an amount such that the ratio of the total number of Si-H groups in the release coating composition to alkenyl groups in the composition is from 0.9:1 to 8:1, more preferably 1.1:1 to 4:1, most preferably 1.5:1 to 3:1.

Suitable hydrosilylation catalysts include complexes or compounds of group VIII metals, for example, platinum, ruthenium, rhodium, palladium, osmium and indium. Preferred catalysts are platinum compounds or complexes including chloroplatinic acid, platinum acetylacetonate, complexes of platinous halides with unsaturated compounds, for example, ethylene, propylene, organovinylsiloxanes and styrene, hexamethyldiplatinum, PtCl₂.PtCl₃ and Pt(CN)₃. Alternatively the catalyst may be a rhodium complex, for example, RhCl₃(Bu₂S)₃.

The polydiorganosiloxane (C) is preferably a linear polydiorganosiloxane consisting essentially ofD units of the formula -(SiR₂-O)- and terminal M units, but can contain some branching, for example it can be a MDT fluid containing T units of the formula RSiO_{3/2} in addition to D and M units. The polydiorganosiloxane (C) is preferably polydimethylsiloxane, although it can contain other lower alkyl groups, for example ethyl. Polydimethylsiloxanes within a wide range of molecular weight, corresponding to the viscosity range of 10-60,000 mPa.s at 25°C, improve the anchorage of the release coating. The polydimethylsiloxane preferably has a viscosity in the range 100-60000 mPa.s, most preferably 100-1000 mPa.s, to give ease of handling as well as best improvement in anchorage and resistance to rub-off. The polydimethylsiloxane preferably has trimethylsilyl terminal units, but alternative terminal units can be present in the polydimethylsiloxane, for example silanol groups.

The polydiorganosiloxane (C) is present at 0.1 to 5% by weight of the total siloxane content of the release coating composition. In general the improvement in anchorage does not increase as the polydimethylsiloxane content is increased above 3 or 5%, and polydimethylsiloxane (C) levels of 1 to 3% are most preferred, although higher levels can be used without decrease in anchorage.

The release coating composition can contain a further additive to further improve anchorage and resistance to rub-off. Examples of such additives are epoxysilanes, oligomeric silanol-terminated polydiorganosiloxanes containing at least one alkenyl group, and melamine resins. The invention thus includes a release coating composition for coating polymer films, comprising a siloxane (A) having alkenyl groups, a crosslinking agent (B) having organohydrogensiloxane groups and a catalyst for the hydrosilylation reaction between (A) and (B), characterised in that the release coating composition additionally contains 0.1 to 5% by weight of a linear polydiorganosiloxane (C) of viscosity 10-60000 mPas at 25°C consisting essentially of diorganosiloxane units of the formula -(SiR₂-O)- in which each R group, which may be the same or different, is an alkyl group having 1 to 4 carbon atoms, and a further adhesion improving additive selected from an epoxysilane (D1) and a silanol-terminated polydiorganosiloxane (D2) containing at least one alkenyl group and having a viscosity of less than 200000 mPa.s, and a melamine resin(D3).

The epoxysilane is generally an epoxy-substituted alkoxysilane, for example an epoxyalkyl trialkoxy silane such as gamma-glycidoxypropyl trimethoxy silane or gamma-glycidoxypropyl triethoxy silane or an epoxyalkyl alkyl dialkoxy silane.

The oligomeric silanol-terminated polydiorganosiloxane generally contains at least one alkenyl group and preferably has silanol groups in both terminal units. The oligomeric silanol-terminated polydiorganosiloxane has a viscosity less than 200000 mPa.s and most preferably contains 4 to 15 siloxane units per molecule.

The melamine resin is generally a condensation product of melamine with an aldehyde, for example formaldehyde, and can be fully or partially etherified, for example a methylated resin such as hexamethoxymethylmelamine or a butylated melamine formaldehyde resin.

The adhesion improving additive D1, D2 and/or D3 is preferably present in the release coating at 0.1 to 5% by weight of the siloxane content of the coating, for example at 0.5 to 3%.

The release coating composition is preferably substantially solventless, but can alternatively be a solution in an organic solvent, for example a solution in a hydrocarbon solvent such as xylene or toluene, or an aqueous emulsion stabilised by a nonionic, anionic cor cationic surfactant. A solution or emulsion can for example have a concentration of for example 4 to 50% by weight. Preferably the release coating composition has a viscosity of not less than 50 mm²/s and not more than 10000 mm²/s at 25°C; more preferably the viscosity is from 50 to 1000 mm²/s.

The composition may additionally comprise one or more inhibitors adapted to prevent the cure of the coating composition from occurring below a predetermined temperature. Examples of suitable inhibitors include ethylenically or aromatically unsaturated amides, acetylenic compounds, ethylenically unsaturated isocyanates, olefinic siloxanes, unsaturated hydrocarbon diesters, conjugated ene-ynes, hydroperoxides, nitriles and diaziridines, specific examples include methyl butynol, dimethyl hexynol or ethynyl cyclohexanol, trimethyl(3,5-dimethyl-1-hexyn-3-oxy)silane, a maleate for example, bis(2-methoxy-1-methylethyl)maleate or diallyl maleate, a fumarate e.g. diethylfumarate or a fumarate/alcohol mixture wherein the alcohol is, for example, benzyl alcohol or 1-octanol and ethenyl cyclohexyl-1-ol. The polydiorganosiloxane (C) is particularly effective in achieving good anchorage of coating compositions containing a maleate diester inhibitor such as bis(2-methoxy 1-methylethyl)maleate or diallyl maleate.

The release coating composition may contain a release modifier in order to control (increase) the level of release force (the adhesive force between the release coating and the adhesive label). Release coating compositions having the required release force can be formulated from a premium (modifier-free) release coating composition by adjusting the level of modifier. The release modifier is usually packaged as a separate component so that the amount of modifier added to the release coating composition can be controlled. The release modifier package may also contain the polydiorganosiloxane anchorage additive(C) as described above. Any appropriate silicone release modifier may be used. Examples include an alkenylated silicone resin, an alkenylated polydiorganosiloxane, one or more primary alkenes containing from 12 to 30 carbon atoms, and/or one or more branched alkenes containing at least 10 carbon atoms.

Other constituents which may also be added to release coating compositions of the present invention include, for example, bath life extenders such as an alcohol, reactive diluents, fragrances, preservatives and fillers, for example, silica, quartz or chalk.

While release coating compositions of the present invention may be prepared by merely premixing the constituents together, it may be more desirable to prepare such compositions in separate parts or packages to be combined at the time the composition is applied as a coating. The packages can for example be:
- a first part comprising the alkenyl siloxane and inhibitor, a second part comprising a release modifier and inhibitor, a third part comprising the catalyst and a fourth part comprising the cross-linking agent; or
- a first part comprising the alkenyl siloxane and catalyst, a second part comprising a release modifier and the catalyst and a third part comprising the cross-linking agent and inhibitor.

The polydiorganosiloxane (C), preferably polydimethylsiloxane, can be incorporated in any one or more of these packages or be added to the coating bath as a separate component. For example the polydimethylsiloxane is preferably mixed with the alkenyl siloxane but can alternatively or additionally be mixed with the release modifier. Similarly any additional adhesion promoter such as an epoxysilane, an oligomeric silanol-terminated polydiorganosiloxane containing at least one alkenyl group, or a melamine resin, can be incorporated in any of the above packages or be added to the coating bath as a separate component.

The polymer film substrate to which the release coating is applied can for example be polyester, particularly polyethylene terephthalate, polyethylene, polypropylene, or polystyrene films, including oriented and biaxially oriented films, for example biaxially oriented polypropylene. The polymer film substrate can alternatively be plastic coated paper, for example paper coated with polyethylene.

The linear polydiorganosiloxane fluid (C) provides improved anchorage without showing any migration of the silicone as measured by extractables testing and subsequent adhesive strength testing. The siloxane fluids (C) described in this invention are essentially unreactive to adhesives, so that very little interaction with the adhesive has been found to occur. Good release stability against adhesives over extended time periods has been found.

The polymer film is preferably exposed to a corona discharge before the release coating is applied. Although the polydiorganosiloxane fluid (C) improves anchorage even without corona treatment, in certain instances the anchorage may be further improved if the film is corona treated before coating. Corona treatment is preferably carried out just before coating; the corona discharge station can be incorporated as a pre-treatment in the film coating apparatus. An alternative film pre-treatment to further improve coating anchorage is flame treatment. Use of the polydiorganosiloxane fluid (C) to improve anchorage however avoids the need to treat a polyester film surface with primers before applying the release coating.

The release coating can for example be applied to the polymer substrate by spraying, doctor blade, dipping, screen printing or by a roll coater, e.g. an offset web coater, kiss coater or etched cylinder coater.

After application the release coating is cured on the polymer film at a temperature of 80-200°C, preferably 100-160°C. The polydiorganosiloxane fluid does not affect the temperature at which the coating cures. Under production coater conditions cure can be affected in a residence time of 1.5 to 3 seconds at an air temperature of 120-150°C. Heating can be carried out in an oven, e.g. an air circulation oven or tunnel furnace or by passing the coated film around heated cylinders.

The invention is illustrated by the following detailed Examples, in which parts and percentages are by weight and all viscosities were measured at 25°C.

### Comparative Example C1

97 parts of a linear vinyl end-capped polydimethylsiloxane of viscosity about 350 mPa.s was mixed with 0.20% 1-ethynyl-1-cyclohexanol inhibitor, 3.10 parts poly(methylhydrogen)siloxane crosslinker and 2.4 parts of the catalyst reaction product of chloroplatinic acid and divinyltetramethyldisiloxane (0.5%Pt). The molar ratio of Si-H groups to vinyl groups in the resulting release coatings composition was about 2.6:1.

The above composition was blade coated at about 1.2 g/m² on Terphane 36 (Trade Mark) micron polyethylene terephthalate (PET) film (Toray Industries) at 20°C and the coated film was cured in an air circulation oven at different temperatures using a dwell time of 2.4 seconds. The measured coat weight and web temperature at the oven outlet are shown in Table 1.

### Examples 1 to 3

The comparative Example was repeated with the addition of polydimethylsiloxane (PDMS) fluid according to the invention to improve anchorage. The PDMS additive in each Example was as follows:
Example 1 - 3% trimethylsilyl-endblocked PDMS of viscosity 100 mPas
Example 2 - 3% trimethylsilyl-endblocked PDMS of viscosity 60000 mPa.s
Example 3 - 3% PDMS of viscosity 13500 mPa.s having silanol end groups.

A portion of the cured coated film was immersed in a solution of methyl isobutyl ketone solvent to extract any siloxane which had not been cross-linked. After an hour the sample was removed from the solvent, dried and reweighed. The % extractables indicated in Table 1 are the % weight losses and is a measure of cure (100% extractables = no cure, 0% extractables = complete cure).

The cured coated film was stored for 17 days at ambient temperature of about 25°C and humidity of 90%. After storage, the anchorage and rub-off resistance was tested by a rubbing test at a predetermined pressure. The results are listed in Table 1 as
N, N, N = No smear, no migration. No rub off
VsRO = Very slight rub off
SRO = Slight rub off
RO = Rub off

Also after the 17 days storage under 90% relative humidity, delamination tests were carried out on the coated films cured at 120°C using a TESA^{®} 7475 tape which uses an acrylic pressure sensitive adhesive. In each of these tests delamination was undertaken using a Lloyd^{®} Instruments L500 Tensometer at a delamination speed of 0.3m/min.

**Table 1**

| **Example** | **Actual Web temp/C** | **% Extr** | **Coat Weight g/m2** | **Anchorage 17 days 90% humidity** | **Release Force cN/25mm acrylic PSA** |
|---|---|---|---|---|---|
| C1 | 120 | 2.18 | 1.145 | RO | 16 |
| C1 | 130 | 0.72 | 1.243 | sRO | |
| C1 | 150 | 1.34 | 1.271 | NNN | |
| 1 | 130 | 2.87 | 1.150 | vsRO | 22 |
| 1 | 120 | 7.53 | 1.182 | vsRO | |
| 1 | 150 | 2.63 | 1.255 | NNN | |
| 2 | 120 | 6.24 | 1.201 | vsRO | 22 |
| 2 | 130 | 3.78 | 1.163 | NNN | |
| 2 | 150 | 0.52 | 1.155 | NNN | |
| 3 | 120 | 2.29 | 1.224 | sRO | 16 |
| 3 | 130 | 1.34 | 1.343 | NNN | |
| 3 | 150 | 1.35 | 1.262 | NNN | |

The results given in Table 1 show that show that, at both 120°C and 130°C, the anchorage of each of the release coatings of Examples 1 to 3 is better than the comparative example.

### Example 4

A release coating composition was prepared according to Example 1, but with the addition of 2% of a mixture of equal weights of an epoxy silane and a polydimethysiloxane with hydroxyl and vinyl end -groups and an increase in the level of poly(methylhydrogen)siloxane crosslinker to give a molar ratio of Si-H groups to vinyl groups of 3.9:1. The release coating was applied to PET film as described in Example 1 using a web temperature of 130°C and coating weight 1.382 g/m². This coating gave a result of NNN in the anchorage test and 3.62% extractables.

By comparison, a release coating composition was prepared according to Comparative Example 1 with the addition of 2% of the mixture of epoxy silane and a polydimethysiloxane with hydroxyl and vinyl end groups and an increase in the level of poly(methylhydrogen)siloxane crosslinker to give a molar ratio of Si-H groups to vinyl. groups of the vinylfunctional polydimethylsiloxane of 5.2:1. The release coating was applied to PET film as described in Example 1 using a web temperature of 130°C and coating weight 1.345 g/m². This coating gave a result of vsRO in the anchorage test and 2.23% extractables.

### Examples 5 to 8

30 parts of the linear vinyl end-capped polydimethylsiloxane of Example 1 containing 0.25% ethynylcyclohexanol inhibitor (ECH) and 3% trimethylsilyl-endblocked PDMS of viscosity 350 mPa.s was mixed with 20 parts of a vinyl-functional silicone resin containing SiO_{4/2} units as release modifier, 2.87 parts poly(methylhydrogen)siloxane crosslinker (resultant molar ratio of Si-H groups to vinyl groups about 2.0:1) and the following amounts of the catalyst of Example 1:
Example 5 -1.20 (120 ppm platinum in release coating composition)
Example 6 -1.35 (135 ppm Pt)
Example 7 -1.50 (150 ppm Pt)
Example 8 - 0.60 (60 ppm Pt)

The above compositions were each coated at about 1.2 g/m² on Melinex (Trade Mark) PET film and cured in a laboratory oven at 160°C for 20 seconds. The coated films were subjected to an anchorage (rubbing) test as described in Example 1, the tests being carried out immediately after coating and after 6 days storage. The coated films were also laminated to adhesive-coated tapes comprising a rubber-based adhesive A1 or hot melt rosin-based adhesives A2 or A3. The laminates were aged at 60°C for 20 hours, then the adhesive was separated from the release-coated film and the release-coated film was subjected to an anchorage (rubbing) test as described above. The results are shown in Table 2.

### Examples 9 to 12

Examples 5 to 8 were repeated with the variation that the ethynyl cyclohexanol inhibitor was replaced by 0.7% bis(2-methoxy-1-methylethyl)maleate (BIS). The results of the rubbing tests are shown in Table 2.

### Examples 13 to 16

Examples 9 to 12 were repeated with the amount of bis(2-methoxy 1-methylethyl) maleate inhibitor in the vinyl end-capped polydimethylsiloxane being increased to 1.4%. The results of the rubbing tests are shown in Table 2.

### Examples 17 and 18

Examples 9 and 12 were repeated with the bis(2-methoxy-1-methylethyl)maleate inhibitor being replaced by an equal amount of diallyl maleate (DAM). The results of the rubbing tests are shown in Table 2.

**Table 2**

| **Example** | **Catalyst** | **Inhibitor** | **Results of Rubbing Tests** | | | | |
|---|---|---|---|---|---|---|---|
| | **concn.(ppm)** | **concn.** | **Immed** | **6 day** | **A1** | **A2** | **A3** |
| 5 | 120 | 0.25% ECH | NNN | vsRO | RO | RO | vsRO |
| 6 | 135 | 0.25% ECH | NNN | NNN | RO | RO | RO |
| 7 | 150 | 0.25% ECH | NNN | NNN | RO | NNN | RO |
| 8 | 60 | 0.25% ECH | sRO | vsRO | RO | RO | RO |
| 9 | 120 | 0.7% bis | NNN | NNN | NNN | NNN | NNN |
| 10 | 135 | 0.7% BIS | NNN | vsRO | NNN | vsRO | NNN |
| 11 | 150 | 0.7% BIS | NNN | NNN | vsRO | vsRO | NNN |
| 12 | 60 | 0.7% BIS | vsRO | NNN | sRO | sRO | sRO |
| 13 | 120 | 1.4% BIS | NNN | NNN | vsRO | NNN | NNN |
| 14 | 135 | 1.4% BIS | NNN | NNN | NNN | NNN | NNN |
| 15 | 150 | 1.4% BIS | vsRO | NNN | NNN | NNN | NNN |
| 16 | 60 | 1.4% BIS | vsRO | vsRO | sRO | vsRO | vsRO |
| 17 | 120 | 0.7% DAM | NNN | NNN | vsRO | vsRO | NNN |
| 18 | 60 | 0.7% DAM | vsRO | vsRO | RO | RO | RO |

### Example 19

100 parts of a vinyl-terminated MDQ polydimethylsiloxane of the type described in EP-A-1070734 having a degree of polymerisation of 85 units was mixed with 9.64 parts poly(methylhydrogen)siloxane crosslinker to give a SiH:vinyl molar ratio of 2.6, 0.2 parts ethynylcyclohexanol inhibitor and 2.4 parts of the catalyst composition used in Example 1. 25 parts of the above composition was mixed with 0.5 parts trimethylsilyl-endblocked PDMS of viscosity 350 mPa.s. The resulting composition was coated on high density polyethylene film and cured for 20 seconds at 100°C. The cured coating had 3.3% extractables. The coated film was subjected to an anchorage (rubbing) test as described in Example 1 and had a rating of N/N/N both initially and after 24 hours and also after 50 days storage not exposed to sunlight.

By comparison, when Example 19 was repeated with the omission of the trimethylsilyl-endblocked PDMS of viscosity 350 mPa.s the anchorage rating was RO initially and after 24 hours and there was very little anchorage after the 50 days storage.

## Claims

1. A process for release coating of a polymer film with a composition comprising a siloxane (A) having alkenyl groups, a crosslinking agent (B) having organohydrogensiloxane groups and a catalyst for the hydrosilylation reaction between (A) and (B), comprising applying the composition to the polymer film and heating the coated film to cure the release coating, **characterised in that** the release coating composition additionally contains 0.1 to 5% by weight based on the total siloxane content of the composition of a polydiorganosiloxane (C) of viscosity 10-60,000 mPa.s at 25°C consisting essentially of diorganosiloxane units of the formula-(SiR₂-O)- in which each R group, which may be the same or different, is an alkyl group having 1 to 4 carbon atoms, to improve anchorage of the release coating on the polymer film.

2. A process according to Claim 1, wherein the polydiorganosiloxane (C) is a linear polydiorganosiloxane.

3. A process according to Claim 1 or Claim 2, wherein the polydiorganosiloxane (C) is polydimethylsiloxane.

4. A process according to Claim 3, wherein the polydimethylsiloxane has trimethylsilyl terminal units.

5. A process according to Claim 3 wherein the terminal units of the polydimethylsiloxane contain silanol groups.

6. A process according to any of Claims 1 to 5 wherein the polydiorganosiloxane (C) is present at 1 to 3% by weight of the total siloxane content of the release coating composition.

7. Use of a polydiorganosiloxane (C) of viscosity 10-200000 mPa.s at 25°C consisting essentially of diorganosiloxane units of the formula- (SiR₂-O)-, in which each R group, which may be the same or different, is an alkyl group having 1 to 4 carbon atoms, to increase the anchorage of a release coating composition, comprising a siloxane (A) having alkenyl groups, a crosslinking agent (B) having organohydrogensiloxane groups and a catalyst for the hydrosilylation reaction between (A) and (B), on a polymer film substrate.

8. A method of increasing the anchorage of a release coating composition, comprising a siloxane (A) having alkenyl groups, a crosslinking agent (B) having organohydrogensiloxane groups and a catalyst for the hydrosilylation reaction between (A) and (B), on a polymer film substrate, wherein a polydiorganosiloxane (C) of viscosity 10-60,000 mPa.s at 25°C consisting essentially of diorganosiloxane units of the formula- (SiR₂-0)-, in which each R group, which may be the same or different, is an alkyl group having 1 to 4 carbon atoms, is incorporated in the release coating composition in an amount of 0.1 to 5% by weight based on the total siloxane content of the composition.

9. A release coating composition for coating polymer films, comprising a siloxane (A) having alkenyl groups, a crosslinking agent (B) having organohydrogensiloxane groups and a catalyst for the hydiosilylation reaction between (A) and (B), **characterised in that** the release coating composition additionally contains 0.1 to 5% by weight, based on the total siloxane content of the composition, of a polydiorganosiloxane (C) of viscosity 10-60,000 mPa.s at 25°C consisting essentially of diorganosiloxane units of the formula-(SiR₂-O)-in which each R group, which may be the same or different, is an alkyl group having 1 to 4 carbon atoms, and a further adhesion improving additive selected from an epoxysilane (D1) and a silanol-terminated polydiorganosiloxane (D2) containing at least one alkenyl group and having a viscosity of less than 200,000 mPa.s, and a melamine resin (D3).

## Patentansprüche

1. Verfahren zur Trennbeschichtung eines Polymerfilms mit einer 2usammensetzung, die ein Siloxan (A) mit Alkenylgruppen, ein Vernetzungsmittel (B) mit Organohydrogensiloxangruppen und einen Katalysator für die Hydrosilylierungsreaktion zwischen (A) und (B) umfasst, das Folgendes umfasst: Auftragen der 2zusammensetzung auf den Polymerfilm und Erwärmen des beschichteten Films, um die Trennbeschichtung auszuhärten, **dadurch gekennzeichnet, dass** die Trennbeschichtungszusammensetzung zusätzlich 0,1 bis 5 Gewichts-%, bezogen auf den gesamten Siloxangehalt der 2usammensetzung, eines Polydiorganosiloxans (C) der Viskosität 10-60 000 mPa·s bei 25°C enthält, das im Wesentlichen aus Diorganosiloxaneinheiten der Formel -(SiR₂-O)- besteht, in der jede R-Gruppe, die gleich oder verschieden sein kann, eine Alkylgruppe mit 1 bis 4 Kohlenstoffatomen ist, um die Verankerung der Trennbeschichtung auf dem Polymerfilm zu verbessern.

2. Verfahren nach Anspruch 1, worin das Polydiorganosiloxan (C) ein lineares Polydiorganosiloxan ist.

3. Verfahren nach Anspruch 1 oder Anspruch 2, worin das Polydiorganosiloxan (C) Polydimethylsiloxan ist.

4. Verfahren nach Anspruch 3, worin das Polydimethylsiloxan Trimethylsilyl-Endeinheiten aufweist.

5. Verfahren nach Anspruch 3, worin die Endeinheiten des Polydimethylsiloxans Silanolgruppen enthalten.

6. Verfahren nach einem der Ansprüche 1 bis 5, worin das Polydiorganosiloxan (C) zu 1 bis 3 Gewichts-% des gesamten Siloxangehalts der Trennbeschichtungszusammensetzung vorliegt.

7. Verwendung eines Polydiorganosiloxans (C) der Viskosität 10-200 000 mPa·s bei 25°C, das im Wesentlichen aus Diorganosiloxaneinheiten der Formel -(SiR₂-O)- besteht, in der jede R-Gruppe, die gleich oder verschieden sein kann, eine Alkylgruppe mit 1 bis 4 Kohlenstoffatomen ist, um die Verankerung einer Trennbeschichtungszusammensetzung, die ein Siloxan (A) mit Alkenylgruppen, ein Vernetzungsmittel (B) mit Organohydrogensiloxangruppen und einen Katalysator für die Hydrosilylierungsreaktion zwischen (A) und (B) umfasst, auf einem Polymerfilmsubstrat zu verstärken.

8. Verfahren zur Verstärkung der Verankerung einer Trennbeschichtungszusammensetzung, die ein Siloxan (A) mit Alkenylgruppen, ein Vernetzungsmittel (B) mit Organohydrogensiloxangruppen und einen Katalysator für die Hydrosilylierungsreaktion zwischen (A) und (B) umfasst, auf einem Polymerfilmsubstrat, worin ein Polydiorganosiloxan (C) der Viskosität 10-60 000 mPa·s bei 25°C, das im Wesentlichen aus Diorganosiloxaneinheiten der Formel -(SiR₂-O)- besteht, in der jede R-Gruppe, die gleich oder verschieden sein kann, eine Alkylgruppe mit 1 bis 4 Kohlenstoffatomen ist, in die Trennbeschichtungszusammensetzung in einer Menge von 0,1 bis 5 Gewichts-%, bezogen auf den gesamten Siloxangehalt der Zusammensetzung, eingebracht wird.

9. Trennbeschichtungszusammensetzung zur Beschichtung von Polymerfilmen, die ein Siloxan (A) mit Alkenylgruppen, ein Vernetzungsmittel (B) mit Organohydrogensiloxangruppen und einen Katalysator für die Hydrosilylierungsreaktion zwischen (A) und (B) umfasst, **dadurch gekennzeichnet, dass** die Trennbeschichtungszusammensetzung zusätzlich Folgendes enthält: 0,1 bis 5 Gewichts-%, bezogen auf den gesamten Siloxangehalt der Zusammensetzung, eines Polydiorganosiloxans (C) der Viskosität 10-60 000 mPa·s bei 25°C, das im Wesentlichen aus Diorganosiloxaneinheiten der Formel -(SiR₂-O)- besteht, in der jede R-Gruppe, die gleich oder verschieden sein kann, eine Alkylgruppe mit 1 bis 4 Kohlenstoffatomen ist, und einen weiteres, die Haftung verbesserndes Additiv, das aus einem Epoxysilan (D1) und einem Polydiorganosiloxan mit Silanol-Endgruppe (D2), das mindestens eine Alkenylgruppe enthält und eine Viskosität von kleiner als 200 000 mPa·s aufweist, und einem Melaminharz (D3) ausgewählt ist.

## Revendications

1. Processus pour revêtement anti-adhérent d'une pellicule polymère avec une composition comprenant un siloxane (A) ayant des groupes alcényle, un agent de réticulation (B) ayant des groupes organohydrogensiloxane et un catalyseur pour la réaction d'hydrosilylation entre (A) et (B), comprenant l'application de la composition à la pellicule polymère et le chauffage de la pellicule enduite pour durcir le revêtement anti-adhérent, **caractérisé en ce que** la composition de revêtement anti-adhérent contient en outre 0,1 à 5 % en poids sur la base de la teneur totale en siloxane de la composition d'un polydiorganosiloxane (C) de viscosité 10 - 60 000 mPa·s à 25° C consistant essentiellement en des unités diorganosiloxane de la formule -(SiR₂-0)- dans laquelle chaque groupe R, qui peuvent être identiques ou différents, est un groupe alkyle ayant de 1 à 4 atomes de carbone, pour améliorer l'ancrage du revêtement anti-adhérent sur la pellicule polymère.

2. Processus selon la revendication 1, dans lequel le polydiorganosiloxane (C) est un polydiorganosiloxane linéaire.

3. Processus selon la revendication 1 ou la revendication 2, dans lequel le polydiorganosiloxane (C) est polydiméthylsiloxane.

4. Processus selon la revendication 3, dans lequel le polydiméthylsiloxane présente des unités d'extrémité triméthylsilyle.

5. Processus selon la revendication 3, dans lequel les unités d'extrémité du polydiméthylsiloxane contiennent des groupes silanol.

6. Processus selon l'une quelconque des revendications 1 à 5, dans lequel le polydiorganosiloxane (C) est présent à 1 à 3 % en poids de la teneur totale en siloxane de la composition de revêtement anti-adhérent.

7. Utilisation d'un polydiorganosiloxane (C) de viscosité 10 - 200 000 mPa.s à 25° C consistant essentiellement en des unités diorganosiloxane de la formule -(SiR₂-0)-, dans laquelle chaque groupe R, qui peuvent être identiques ou différents, est un groupe alkyle ayant de 1 à 4 atomes de carbone, pour augmenter l'ancrage d'une composition de revêtement anti-adhérent, comprenant un siloxane (A) ayant des groupes alcényle, un agent de réticulation (B) ayant des groupes organohydrogensiloxane et un catalyseur pour la réaction d'hydrosilylation entre (A) et (B), sur un substrat de pellicule polymère.

8. Procédé pour augmenter l'ancrage d'une composition de revêtement anti-adhérent, comprenant un siloxane (A) ayant des groupes alcényle, un agent de réticulation (B) ayant des groupes organohydrogensiloxane et un catalyseur pour la réaction d'hydrosilylation entre (A) et (B), sur un substrat de pellicule polymère, dans lequel un polydiorganosiloxane (C) de viscosité 10 - 60 000 mPa.s à 25° C consistant essentiellement en des unités diorganosiloxane de la formule -(SiR₂-0)- dans laquelle chaque groupe R, qui peuvent être identiques ou différents, est un groupe alkyle ayant de 1 à 4 atomes de carbone, est incorporé dans la composition de revêtement anti-adhérent dans une quantité de 0,1 à 5 % en poids sur la base de la teneur totale en siloxane de la composition.

9. Composition de revêtement anti-adhérent pour enduire des pellilules polymères, comprenant un siloxane (A) ayant des groupes alcényle, un agent de réticulation (B) ayant des groupes organohydrogensiloxane et un catalyseur pour la réaction d'hydrosilylation entre (A) et (B), **caractérisée en ce que** la composition de revêtement anti-adhérent contient en outre 0,1 à 5 % en poids, sur la base de la teneur totale en siloxane de la composition, d'un polydiorganosiloxane (C) de viscosité 10 - 60 000 mPa.s à 25° C consistant essentiellement en des unités diorganosiloxane de la formule -(SiR₂-0)- dans laquelle chaque groupe R, qui peuvent être identiques ou différents, est un groupe alkyle ayant de 1 à 4 atomes de carbone, et un adjuvant d'amélioration d'adhésion supplémentaire sélectionné parmi un époxysilane (D1) et un polydiorganosiloxane terminé par silanol (D2) contenant au moins un groupe alcényle et ayant une viscosité inférieure à 200 000 mPa.s et une résine de mélamine (D3).
